# EUROPÄISCHE PATENTSCHRIFT

(11) **EP 4 315 589 B1**
(45) Veröffentlichungstag und Bekanntmachung des Hinweises auf die Patenterteilung: **09.09.2026**
(21) Anmeldenummer: 22751700.0
(22) Anmeldetag: 14.07.2022
(51) Int. Cl.: H02P 23/00, H02P 25/022, H02P 27/14, H02M 7/487, H02M 1/00, H02K 21/00, H02K 16/02

(54) **ELEKTRISCHES ANTRIEBSSYSTEM SOWIE VERFAHREN**
ELECTRIC DRIVE SYSTEM AND METHOD
SYSTÈME D'ENTRAÎNEMENT ÉLECTRIQUE ET PROCÉDÉ

(30) Priorität: 29.07.2021 DE 102021003941
(43) Veröffentlichungstag der Anmeldung: 07.02.2024
(73) Patentinhaber: DeepDrive GmbH, 85748 Garching bei München (DE)
(72) Erfinder: ROSEN, Alexander, 49090 Osnabrück (DE); RÖMMELMAYER, Christopher, 82256 Fürstenfeldbruck (DE); HABERSBRUNNER, Maximilian, 80999 München (DE)
(74) Vertreter: Isarpatent
(86) Internationale Anmeldenummer: PCT/EP2022/069787
(87) Internationale Veröffentlichungsnummer: WO 2023/006441

(56) Entgegenhaltungen:
- EP-A2- 1 191 673
- EP-B1- 3 224 075
- US-A- 5 982 070
- US-A1- 2009 091 204
- US-A1- 2012 155 135
- US-A1- 2014 233 290
- US-A1- 2016 268 950
- US-A1- 2017 317 607
- FABIO CRESCIMBINI ET AL: "High-Speed Generator and Multilevel Converter for Energy Recovery in Automotive Systems", IEEE TRANSACTIONS ON INDUSTRIAL ELECTRONICS, IEEE SERVICE CENTER, PISCATAWAY, NJ, USA, vol. 59, no. 6, 1 June 2012 (2012-06-01), pages 2678 - 2688, XP011409235, ISSN: 0278-0046, DOI: 10.1109/TIE.2011.2160513
- CAO LIBING ET AL: "A Double-Rotor Flux-Switching Permanent-Magnet Motor for Electric Vehicles With Magnetic Differential", IEEE TRANSACTIONS ON INDUSTRIAL ELECTRONICS, IEEE SERVICE CENTER, PISCATAWAY, NJ, USA, vol. 68, no. 2, 29 January 2020 (2020-01-29), pages 1004 - 1015, XP011817849, ISSN: 0278-0046, [retrieved on 20201103], DOI: 10.1109/TIE.2020.2969101

## Beschreibung

### GEBIET DER ERFINDUNG

Die vorliegende Erfindung betrifft ein elektrisches Antriebssystem für oder in einem Kraftfahrzeug sowie ein Verfahren zum Betreiben eines solchen elektrischen Antriebssystems.

### TECHNISCHER HINTERGRUND

Ein Wechselrichter, auch Inverter oder Drehrichter genannt, ist ein elektrisches Gerät, das Gleichspannung in Wechselspannung umwandelt. Solche Wechselrichter finden zum Beispiel Anwendung in modernen Kraftfahrzeugen, in der Photovoltaik (Solarinverter), als Komponenten bei Frequenzumrichtern und vielen anderen Anwendungen, bei denen aus einer Gleichspannung eine geeignete Wechselspannung erzeugt werden soll. Derartige Wechselrichter sowie deren Anwendungsgebiete sind in vielfältigen schaltungstechnischen Varianten allgemein bekannt, sodass auf deren schaltungstechnischen Aufbau und Funktionsweise nicht näher eingegangen werden muss.

Bei modernen Kraftfahrzeugen werden - unter anderem auch aus Nachhaltigkeitsgründen und zur Vermeidung von CO2-Emmision - zunehmend elektrisch gespeiste Antriebssysteme eingesetzt. Derartige Antriebssysteme beinhalten zum Beispiel ein oder mehrere elektrische Maschinen, wie etwa Synchronmaschinen oder Asynchronmaschinen, welche über eine mehrphasige Wechselspannung gespeist werden. Zur Erzeugung der Wechselspannung werden im Allgemeinen so genannte zwei-Stufen Wechselrichter (auch 2-Level Wechselrichter oder kurz 2L-Wechselrichter genannt) eingesetzt. Bei zwei-Stufen Wechselrichtern wird aus der Gleichspannung einer Gleichspannungsquelle eine Wechselspannung mit zwei Spannungsniveaus erzeugt.

Zwei-Stufen Wechselrichtern haben sich insbesondere im Bereich Antriebswechselrichter für Elektrofahrzeuge gegenüber anderen Wechselrichtertopologien durchgesetzt. Derzeit werden bei zwei-Stufen Wechselrichtern überwiegend IGBT-Schaltelemente eingesetzt. Ein Beispiel eines solchen zwei-Stufen Wechselrichters ist zum Beispiel in dem Paper von H. v. Hoeck, "Power Electronic Architectures for Electric Vehicle", erschienen in dem vom IEEE im Jahr 2010 herausgegebenen Buch "Emobility - Electrical Power Train" beschrieben.

Neben der eben genannten zwei-stufigen Wechselrichtertopologie existieren auch drei- oder mehrstufige Wechselrichtertopologien, mit denen also drei- oder mehrstufige Spannungsniveaus erzeugbar sind. Beispiele von mehrstufigen Wechselrichtertopologien sind zum Beispiel in der US 10,903,758 B2 oder der US 2017/0185130 A1 beschrieben.

Die Vorteile mehrerer Spannungslevel sind geringere Oberschwingungen, eine langsamere Spannungsänderung an den Phasenausgängen, geringe elektromagnetische Emissionen (EME) sowie vor allem die Verarbeitung von höheren Spannungen. Aus diesen Gründen werden solche drei- oder mehr-Stufen Wechselrichter derzeit vornehmlich für Hochspannungsanwendungen eingesetzt. Energietechnische Anwendungen, wie z.B. Solarwechselrichter oder Windkraftanlagen, sind dabei etablierte Einsatzbereiche solcher drei- oder mehrstufiger Wechselrichtertopologien. Höhere Spannungen sind bei Elektrofahrzeugen (mit Spannungen von z.B. 400V) nicht zu finden. In der Photovoltaik sind demgegenüber Spannungen von mehr als 1kV üblich, bei anderen erneuerbaren Energien, wie etwa der Windenergie, liegen die Spannungen noch deutlich darüber.

Die eben genannten Vorteile von drei- oder mehrstufigen Wechselrichtern sind der herrschenden Meinung zufolge jedoch nicht ausreichend, um deren Einsatz bei elektrischen Antrieben von Elektrofahrzeugen zu rechtfertigen, wie dies in dem Artikel von Andreas Bubert et. al., "Experimental Validation of Design Concepts for Future EV-Traction Inverters", 2018 IEEE Transportation Electrification Conference and Expo (ITEC), Seiten 795-802 ausgeführt wurde. Aus all diesen Gründen werden drei- oder mehrstufigen Wechselrichtertopologien bei elektrisch angetriebenen Kraftfahrzeugen heute nicht eingesetzt.

In diesem Zusammenhang wird noch auf folgenden Stand der Technik aus der Patentliteratur verwiesen:
- EP 3 224 075 B1;
- US 2012/155135 A1;
- US 2017/317607 A1;
- US 2016/268950 A1;
- US 2009/091204 A1;
- US 5 982 070 A;
- EP 1 191 673 A2;
- US 2014/233290 A1.

Schließlich wird auch noch auf folgende Veröffentlichungen aus der Fachliteratur verwiesen:
- FABIO CRESCIMBINI ET AL: "High-Speed Generator and Multilevel Converter for Energy Recovery in Automotive Systems", IEEE TRANSACTIONS ON INDUSTRIAL ELECTRONICS, IEEE SERVICE CENTER, PISCATAWAY, NJ, USA, Bd. 59, Nr. 6, 1. Juni 2012 (2012-06-01), Seiten 2678-2688, XP011409235, ISSN: 0278-0046, DOI: 10.1109/TIE.2011.2160513
- CAO LIBING ET AL: "A Double-Rotor Flux-Switching Permanent-Magnet Motor for Electric Vehicles With Magnetic Differential", IEEE TRANSACTIONS ON INDUSTRIAL ELECTRONICS, IEEE SERVICE CENTER, PISCATAWAY, NJ, USA, Bd. 68, Nr. 2, 29. Januar 2020 (2020-01-29), Seiten 1004-1015, XP011817849, ISSN: 0278-0046, DOI: 10.1109/TIE.2020.2969101

### ZUSAMMENFASSUNG DER ERFINDUNG

Der vorliegenden Erfindung liegt nun die Aufgabe zugrunde, die Effizienz eines mit einem Doppelrotor aus flussführendem Material aus Vollmaterial ausgestatteten elektrischen Antriebssystems zu verbessern und/oder ein besseres Kosten/Nutzen-Verhältnis im Vergleich zu zwei-stufigen Wechselrichtern zu ermöglichen.

Erfindungsgemäß wird diese Aufgabe durch ein elektrisches Antriebssystem mit den Merkmalen des Patentanspruches 1 und/oder durch ein Verfahren mit den Merkmalen des Patentanspruches 15 gelöst.

Der vorliegenden Erfindung liegt die Erkenntnis zugrunde, dass bei elektrischen Antrieben für Kraftfahrzeuge derzeit im Wesentlichen zweistufige Wechselrichter zum Einsatz kommen. Drei- oder mehrstufige Wechselrichter sind derzeit meist bei nicht-automobilen (Hochspannungs-)Anwendungen zu finden. Der mit der Verwendung von drei- oder mehrstufigen Wechselrichtern einhergehende Zusatznutzen rechtfertigt bei automobilen Anwendungen die damit einhergehenden Mehrkosten bislang nicht.

Die vorliegende Erfindung löst dieses Problem durch die Verwendung einer speziellen Wechselrichterschaltung verbunden mit einer Anpassung des gesamten Antriebssystems, wodurch zwar eine Erhöhung des Gesamtnutzens möglich ist, ohne dass damit eine Erhöhung der Kosten einhergeht.

Offenbart ist die Verwendung eines steuerbaren drei- oder mehrstufigen Wechselrichters, der in einem Drei- oder Mehrstufenbetrieb (nachfolgende als 3L-Betrieb bezeichnet) und in einem Zweistufenbetrieb (nachfolgende als 2L-Betrieb bezeichnet) betreibbar ist. Eine eigens dafür vorgesehen Betriebsmodus-Einstelleinrichtung stellt dabei den jeweiligen Betriebsmodus ein, indem die Leistungsschalter des Wechselrichters in geeigneter Weise angesteuert werden. Die Einstellung des Betriebsmodus erfolgt dabei nach Maßgabe der Gesamteffizienz des gesamten Antriebssystems - und damit nicht etwa nur auf der Basis der elektrischen Maschine und/oder des verwendeten Wechselrichters. Für die Gesamteffizienz werden dabei neben dem erfassten Phasenstrom der elektrischen Maschine - wie auch bei anderen Wechselrichtern - zusätzlich auch weitere die Gesamteffizienz beeinflussenden Parameter und Eigenschaften der elektrischen Maschine berücksichtigt. Letzteres wird bei bekannten Antriebssystemen für die Effizienzbetrachtung und Effizienzanalyse eben nicht berücksichtigt. Es erfolgt hier also eine gesamtheitliche Effizienzbetrachtung.

Die Idee der vorliegenden Erfindung besteht nun darin, die Verluste vor allem bei kleinen Lasten zu reduzieren, indem der Wechselrichter in diesem Fall in einem 3L-Betrieb betrieben wird. Dabei werden die Verluste des Wechselrichters in allen Betriebspunkten höchstens unwesentlich erhöht oder sogar verringert. Die Gesamteffizienz des Antriebssystems, also des Wechselrichters und der elektrischen Maschine, steigt damit besonders bei Anwendung in elektrisch angetriebenen Fahrzeugen signifikant an.

Der Kern der vorliegenden Erfindung besteht in der Verwendung einer speziellen elektrischen Maschine, die mit einem Doppelrotor aus massiven Rotormaterial, also in Vollbauweise, ausgestattet ist. Derartige Elektromotoren weisen besonders hohe Verluste auf. Die vorliegende Erfindung löst das Problem hoher Verluste im Doppelrotor aus Massivmaterial in bekannten elektrischen Maschinen. Die hier zugrundeliegende Erkenntnis besteht darin, dass elektrische Maschinen mit Doppelrotor aus Vollmaterial hohe Verluste im Rotor aufweisen. Konstruktiv können die Verluste in der elektrischen Maschine nicht oder nur unwesentlich verringert werden. Eine Verringerung der Verluste durch Frequenzerhöhung im 2L-Betrieb zeigt nur geringe Wirkung und erhöht die Verluste im Wechselrichter, was wiederum die Gesamteffizienz beeinflusst. Der grundlegende Mechanismus zur Verringerung der Verluste im Massivmaterial des Doppelrotors basiert darauf, dass die Amplitude derjenigen magnetischen Flussdichte im Massivmaterial des Doppelrotors verringert werden sollte, welche nicht zur Drehmomentbildung beiträgt. Dieser Anteil, welche durch Oberwellen in der Flussdichte definiert ist, ist näherungsweise im Quadrat seiner Amplitude direkt proportional zur Änderung der THD-induzierten Verluste. Somit führt also eine Änderung der Wechselrichter-Schaltfrequenz zu einer indirekt proportionalen linearen Veränderung der Verluste und ist daher weniger effektiv. Eine Verlustverringerung im massiven Material trägt wesentlich zur Reduzierung der Gesamtverluste der elektrischen Maschine bei und zu deren wirtschaftlichem Einsatz. Die sich daraus ergebende Erkenntnis, die Teil der vorliegenden Erfindung ist, besteht also darin, dass die Verluste in der elektrischen Maschine durch eine Wechselrichterschaltung, die ausschließlich die Amplitude der Oberwellen in der Flussdichte reduziert, effektiv verringert werden können.

Um dies zu erreichen, wurden folgende Maßnahmen und Aspekte bei der Ausgestaltung und bei der Wahl der Betriebsweise des Wechselrichters in Betracht gezogen:
Die Funktion des 2L-Wechselrichters wird durch die Funktion eines 3L-Wechselrichters ersetzt, um die Oberschwingungen an den Phasenausgängen des Wechselrichters zu reduzieren. Dadurch reduzieren sich die Oberschwingungen in der Flussdichte und im Statorstrom. Eine Frequenzänderung ist hierfür nicht notwendig.

Durch eine Erhöhung der Schaltfrequenz im 2L-Betrieb reduzieren sich die Verluste zwar ebenfalls, jedoch wird davon abgesehen, da dadurch die Schaltverluste im Wechselrichter ebenfalls stark ansteigen würden und die Gesamteffizienz somit nicht signifikant verbessert wird. Eine Erhöhung der Schaltfrequenz könnte die Verlustoptimierung zwar positiv unterstützen, ist aber kein wesentlicher Aspekt dieser.

Der verwendete 3L-Wechselrichter bietet drei Spannungslevel (3L) und ist vorzugsweise (jedoch nicht notwendigerweise) dreiphasig ausgeführt. Bei drei Spannungslevels und drei Phasen kann eine relative große Kosteneffizienz realisiert werden. Das System kann aber unter gleicher Ausführung aller Phasen auf beliebig viele Phasen und auf beliebig viele Spannungslevel erweitert werden.

Im Gegensatz zu bekannten 2L-Wechselrichtern sind beim Betrieb eines 3L-Wechselrichters aufgrund der geringeren Oberschwingungen die Leistungsverluste in der elektrischen Maschine stark verringert. Die Schaltverluste des 3L-Wechselrichters werden vergleichsweise ebenfalls reduziert, die Durchlassverluste hingegen erhöht.

Sowohl in der elektrischen Maschine als auch im 3L-Wechselrichter verändern sich die vorherrschenden Verlustmechanismen in Abhängigkeit der Last. Im 3L-Betrieb ist die Oberschwingungen geringer, sodass die Maschinenverluste stark verringert sind. Durch Oberschwingungen induzierte Verluste sind bei niedrigen Strömen dominierend. Bei größeren Strömen ändert sich der vorherrschende Verlustmechanismus und resistive Leitungs- bzw. Kupferverluste dominieren, wohingegen durch Oberschwingungen induzierte Verluste eher untergeordnet sind bzw. vergleichsweise gering ausfallen. Schaltverluste im Wechselrichter sind im 3L- Wechselrichter im Vergleich zu 2L-Wechselrichtern reduziert (näherungsweise um 50%). Bei kleinen Lasten (Strömen) sind diese Schaltverluste vorherrschend, wohingegen bei größeren Strömen Leitungsverluste dominieren und ein 2L-Betrieb effizienter ist. Diese Erkenntnisse führen zu der erfindungsgemäßen Idee, bei niedrigen Lasten einen 3L-Wechselrichter und bei hohen Lasten einen 2L-Wechselrichter zu verwenden. Mittels des erfindungsgemäßen steuerbaren drei- oder mehrstufigen Wechselrichters ist dieser Betrieb möglich.

Insgesamt lassen sich somit - vor allem bei mit Doppelrotormotoren ausgestatteten elektrischen Maschinen - die Vorteile des 2L-Betriebs mit den Vorteilen des 3L-Betriebs kombinieren, um so insgesamt die Gesamteffizienz des elektrischen Antriebssystems im Vergleich zu bekannten elektrischen Antriebssystemen signifikant zu verbessern.

Wesentlich dabei ist, dass die Betriebsmodus-Einstelleinrichtung nicht notwendigerweise hart vom 2L-Betrieb in den 3L-Betrieb und umgekehrt umschaltet. Vielmehr wäre auch denkbar, wenn eine solches Umschalten stattdessen sukzessive erfolgt, beispielsweise indem ein Fading von den inneren Leistungsschaltern zu den äußeren Leistungsschaltern stattfindet. Dieses Fading kann zum Beispiel unter Berücksichtigung der Strommittelwerte der verschiedenen Leistungsschalter vorgenommen werden, sodass die Betriebszeiten bzw. die Zeiten, in denen die jeweiligen Leistungsschalter angeschaltet sind, berücksichtigt werden. Zusätzlich oder alternativ wäre auch denkbar, wenn die Leistungsschalter nach einer vorgegebenen Reichenfolge und/oder langsam geschaltet werden.

Die Betriebsmodus-Einstelleinrichtung beinhaltet, welche zum Beispiel eine Auswerteeinrichtung, eine Steuereinrichtung und/oder Messeinrichtungen aufweist, kann beispielsweise als Programm-gesteuerte Einrichtung, wie etwa als Mikroprozessor oder Mikrocontroller, ausgebildet sein. Denkbar wäre für diese Funktion jedoch auch eine Logikschaltung, wie etwa ein FPGA, PLD oder dergleichen.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einem bevorzugten Aspekt der vorliegenden Erfindung weist die Betriebsmodus-Einstelleinrichtung eine Auswerteeinrichtung auf. Die Auswerteeinrichtung ist dazu ausgelegt, anhand des Phasenstroms sowie anhand des zumindest einen weiteren Parameters und der zumindest einen Eigenschaft des elektrischen Antriebssystems eine Optimierung der Gesamteffizient des elektrischen Antriebssystems vorzunehmen.

Typischerweise, jedoch nicht notwendigerweise, wird dabei die Gesamteffizienz von der Auswerteschaltung nummerisch berechnet. Zusätzlich oder alternativ kann die Gesamteffizienz anhand eines vorgegebenen Kennlinienfelds, welche zum Beispiel in einer Lookup-Tabelle abgebildet ist, ermittelt werden. Dabei kann die Ermittlung der Gesamteffizienz während des Betriebs oder etwa auch im Voraus berechnet bzw. ermittelt werden. Bevorzugterweise wird dabei in einem so genannten Offline-Betrieb die optimale, d.h. möglichst effiziente Betriebsstrategie vor dem Betrieb des elektrischen Antriebssystems, zum Beispiel numerisch, berechnet. Dies lässt sich mit vergleichsweise geringen Rechnerressourcen bewerkstelligen und ist vor allem dann zu bevorzugten, wenn eine Vielzahl von Parametern bei der numerischen Vorausberechnung der optimalen Gesamteffizienz berücksichtigt werden. Zudem steht für den Offline-Betrieb mehr Zeit für die Berechnung zur Verfügung. Alternativ wäre jedoch auch in einem so genannten Real-Time-Betrieb eine sehr dynamische Ermittlung des jeweiligen Betriebsmodus (2L-Betrieb oder 3L-Betrieb) denkbar und möglich, zum Beispiel über eine Lookup-Tabelle. Dies ist insbesondere dann vorteilhaft und möglich, wenn eine geringere Anzahl an Parametern für die Gesamteffizienzberechnung herangezogen wird. Beispielsweise könnte man für diese Zwecke ein trainiertes künstliches Netzwerk verwenden, welches auf der Basis von vorherigen Parameterwerten, Kennlinien und dergleichen trainiert wurde.

Einer bevorzugten Ausgestaltung zufolge weist die Auswerteeinrichtung ein Optimierungsmodul auf, welches dazu ausgebildet ist, die Gesamteffizienz zunächst zu ermitteln. Alternativ oder zusätzlich kann anschließend über eine Optimierungsfunktion die Gesamteffizient unter Berücksichtigung des Phasenstroms sowie des zumindest einen weiteren Parameters und Eigenschaft optimiert werden. Die Optimierung der Gesamteffizienz kann dabei analytisch und/oder über eine geeignete Lookup-Table, welche zum Beispiel vorher generiert wurde, erfolgen.

Als weiterer Parameter ist erfindungsgemäß zumindest einer der folgenden Parameter vorgesehen:
- Temperatur der Wechselrichterschaltung;
- Temperatur der elektrischen Maschine;
- Zwischenkreisspannung des Wechselrichters;
- Rotorgeschwindigkeit oder Rotordrehzahl;
- Drehmoment der elektrischen Maschine;
- Modulationsgrad;
- Phasenspannung oder Phasenstrom.

Denkbar wären natürlich auch noch weitere Parameter.

Der jeweils verwendete Betriebsmodus (z.B. 2L-Betrieb oder 3L-Betrieb) wäre zum Beispiel ein die Gesamteffizienz beeinflussende Eigenschaft der elektrischen Maschine. Eine weitere Eigenschaft kann in der speziellen Ausgestaltung des Rotors der elektrischen Maschine gesehen werden, etwa dergestalt, dass der Rotor ein Doppelrotor ist und/oder dass der Doppelrotor aus flussführendem Material aus Vollmaterial ausgebildet ist.

Gemäß der Erfindung weist die Betriebsmodus-Einstelleinrichtung zumindest eine Messeinrichtung auf:
Eine erste Messeinrichtung weist zumindest einen Sensoreingang auf, über den die erste Messeinrichtung mit der elektrischen Maschine koppelbar ist. Die erste Messeinrichtung ist dabei dazu ausgebildet, den Phasenstrom, die Temperatur, die Rotorgeschwindigkeit und/oder andere messbare Parameter zu erfassen. Zum Beispiel lässt sich die Temperatur der elektrischen Maschine oder dessen Rotor über entsprechende Thermoelemente erfassen. Alternativ lässt sich für die Temperaturmessung auch die Veränderung des temperaturabhängigen elektrischen Widerstands von bestimmten Leitern und Halbleitern oder etwa spezielle Halbleiterschaltungen, um eine zur absoluten Temperatur proportionale Spannung zu erzeugen (Stichwort: Bandabstandsreferenz), nutzen. Das Drehmoment der elektrischen Maschine kann zwar nicht direkt erfasst werden, lässt sich jedoch unter anderem über die Messung des Phasenstroms berechnen. Die Drehzahl des Rotors und daraus die Rotorgeschwindigkeit lassen sich auf mannigfaltige Art und Weise ermitteln, beispielsweise unter Verwendung eines am Rotor angebrachten Hall-Sensors oder eines Inkrementalgebers.

Eine zweite Messeinrichtung die derart angeordnet und ausgebildet, um die Temperatur und/oder die Zwischenkreisspannung des Wechselrichters zu erfassen. Die Temperaturerfassung kann analog wie oben bzgl. der ersten Messeinrichtung vorgenommen werden.

Gemäß einem bevorzugten Ausführungsbeispiel beinhaltet der Wechselrichter eine T-Typ neutralpunkt geklemmte (TNPC = t-type neutral point clamped) Wechselrichterarchitektur. Diese weisen gegenüber mehrstufigen Active Neutral Point Clamped-(ANPC) Wechselrichtertopologien diverse Vorteile auf: Im Gegensatz zu ANPC Topologien sind nicht vier, sondern maximal drei Schalter in Serie leitend und somit die Durchlassverluste geringer. Die Ausgangsspannungsformen sind identisch, was zu ähnlich geringen Schaltverlusten führt, jedoch ist bei höheren Schaltfrequenzen (zum Beispiel >10kHz) die benötigte Gesamtchipfläche der TNPC-Topologie im Vergleich zur Zwei-Level Topologie geringer. Ähnlich wie bei ANPC, kann auch bei TNPC eine hybride Wechselrichtertopologie aufgebaut werden, um die Effizienz weiter zu erhöhen und/oder die Herstellungskosten zu optimieren. Zum Beispiel können hierfür im Nullpotential- oder mittleren Brückenzweig unterschiedliche Schaltertechnologien verwendet werden. Vor allem im Falle eines vollständig mit IGBTs (Insulated Gate Bipolar Transistor) aufgebauten TNPC-Wechselrichters können die Verluste unter Verwendung von Galliumnitrid (GaN) drastisch reduziert werden. Eine Verwendung der hybriden TNPC-Wechselrichtertopologie in Motorregelungen auch in Elektrofahrzeugen ist möglich, in der Praxis aber nicht vorzufinden.

TNPC-basierte 3L-Wechselrichter können in zwei Betriebsarten betrieben werden, um die Systemeffizienz zu erhöhen. Bei 3L-TNPC Wechselrichtern können die Nullpotential (mittleren) Brückenzweige abgeschaltet werden, um im 2L-Betrieb zu arbeiten, und hinzugeschaltet zu werden, um in den 3L-Betrieb zu wechseln. Zwischen beiden Betriebsmodi wird gewechselt, um den Systemwirkungsgrad zu erhöhen. Dafür wird die Last in der Steuer- und Regelungslogik gemessen und mit Hilfe einer zuvor ermittelten Optimierungskennlinie zwischen 2L- und 3L-Operation gewechselt.

Zusätzlich oder alternativ können TNPC-basierte 3L-Wechselrichter asymmetrisch ausgelegt werden, um die Kosten des Wechselrichters zu reduzieren. Die Asymmetrie bezieht sich auf die Stromtragfähigkeit der Nullpotential (mittleren) Brückenzweige, welche geringer ist als die der äußeren Brückenzweige. Dies ist möglich, da die Nullpotential-Brückenzweige bei höheren Lasten nicht mehr genutzt werden, um die Gesamteffizienz zu optimieren. Die äußeren Brückenzweige sind auf Spitzenströme und die Nullpotential-Brückenzweige auf kleine oder kontinuierliche Ströme ausgelegt.

Gemäß einem Ausführungsbeispiel der Erfindung weist der Wechselrichter eine erste Treiberstufe und zumindest eine zweite Treiberstufe auf. Die zweite Treiberstufe ist dazu ausgelegt, Ausgangslastströme an den Lastausgang zu führen, welche kleiner sind als die von der ersten Treiberstufe bereit gestellten Ausgangslastströme.

Vorzugsweise ist dabei die Betriebsmodus-Umschalteinrichtung dazu ausgelegt, den Wechselrichter derart zu steuern, dass abhängig von der Gesamteffizienz im drei- oder mehrstufigen Betrieb die erste Treiberstufe sowie die zweite Treiberstufe aktiviert sind und im zwei-stufigen Betrieb zumindest eine der Treiberstufen deaktiviert ist, vorzugsweise die innere, zweite Treiberstufe.

Typischerweise, jedoch nicht notwendigerweise, weist die erste Treiberstufe zumindest eine Brückenschaltung, insbesondere eine Halbbrückenschaltung, auf, deren Mittelabgriff den Ausgangslastanschluss der Wechselrichterschaltung bildet. Jede Brückenschaltung weist dabei zumindest einen ersten (Halbleiter-)Leistungsschalter auf, welche mit einem ersten Versorgungsanschluss (welcher zum Beispiel mit einem positiven Versorgungspotential beaufschlagt ist) verbunden sind und welche dazu ausgelegt sind, am Lastausgang eine erste Spannungsstufe bereitzustellen. Jede Brückenschaltung weist ferner zumindest einen zweiten (Halbleiter-)Leistungsschalter auf, welche mit einem zweiten Versorgungsanschluss (welcher zum Beispiel mit einem negativen Versorgungspotential oder einem Bezugspotenzial beaufschlagt ist) verbunden sind und welche dazu ausgelegt sind, am Lastausgang eine zweite Spannungsstufe bereitzustellen. Die halbleiterbasierten Leistungsschalter können mit verschiedenen beliebig wählbaren Halbleitermaterialien realisiert werden. Üblicherweise eingesetzte Materialien sind Si (Silizium) für IGBTs und MOSFETs, SiC (Siliziumkarbid) für MOSFETs und GaN (Galliumnitrid) für MOSFETs.

Typischerweise, jedoch nicht notwendigerweise, weist die zweite Treiberstufe zumindest einen dritten Leistungsschalter auf, deren Laststrecken in Reihe zwischen einer Zwischenkreisschaltung und dem Mittelabgriff der ersten Treiberschaltung geschaltet sind. Die Leistungsschalter der zweiten Treiberstufe sind dazu ausgelegt, am Lastausgang einen dritten Spannungslevel, der zwischen dem ersten und dem zweiten Spannungslevel liegt, bereitzustellen.

Im Fall einer bevorzugten, so genannten homogenen Wechselrichtertopologie sind alle Leistungsschalter des Wechselrichters, also die Leistungsschalter der ersten Treiberstufe und/oder der zweiten Treiberstufe, als Halbleiterschalter desselben Schaltertyps und/oder derselben Halbleitertechnologie ausgebildet. Schaltertypen sind zum Beispiel, Bipolartransistoren, Feldeffekttransistoren (wie etwa MOSFETs, JFETs, etc.), Thyristoren, IGBTs, etc.. Unter der Halbleitertechnologie wird diejenige Halbleitertechnologie bezeichnet, auf deren Basis der Leistungsschalter hergestellt wird, wie etwa auf Basis der Si-, SiC-, GaAs- oder GaN-Technologie.

In einer ersten, bevorzugten Variante der homogenen Wechselrichtertopologie sind die Halbleiterschalter als GaN-Leistungsschalter, zum Beispiel als GaN-MOSFET, ausgebildet. In einer zweiten, besonders bevorzugten Variante sind die Halbleiterschalter als SiC-Leistungsschalter, insbesondere als SiC-MOSFETs, ausgelegt. Darüber hinaus wären IGBTbasierte Leistungsschalter, beispielsweise Silizium-basierte IGBTs mit Si-Diode oder SiC-Diode, ebenfalls denkbar

Im Fall einer besonders bevorzugten, so genannten hybriden Wechselrichtertopologie sind für die Halbleiterschalter des Wechselrichters, also für die Halbleiterschalter der ersten Treiberstufe und/oder für die Halbleiterschalter der zweiten Treiberstufe, zumindest zwei unterschiedliche Schaltertypen und/oder zumindest zwei unterschiedliche Halbleitertechnologien vorgesehen. Bei der hybriden Wechselrichtertopologie werden innerhalb des Wechselrichters nicht die gleichen Halbleitermaterialien für alle Leistungsschalter verwendet. Insbesondere wird für die Leistungsschalter des Nullpotential-Brückenzweiges, also für die zweite Treiberstufe, eine andere Technologie (andere Schaltertypen) verwendet als für die äußeren Schalter der ersten Treiberstufe. Dadurch realisiert man Effizienzvorteile bedingt durch reduzierten Schalt- und Durchlassverlusten. Zusätzlich ergeben sich auch Kostenvorteile. Empfehlenswert ist insbesondere die Optimierung der Leistungsschalter in den Nullpotential-Brückenzweigen (zweite Treiberstufe) auf niedrige Schaltverluste und möglichst geringe Reverse-Recovery Verluste. Dies ist sinnvoll, da die Nullpotential-Brückenzweige (zweite Treiberstufe) bei geringen Strömen aktiviert sind und niedrige Reverse-Recovery Verluste zudem die Schaltverluste in den äußeren Schaltern reduzieren. Ein hybrides Design ist insbesondere dann zu empfehlen, wenn der Wechselrichter asymmetrisch ausgelegt ist. Je geringer die Stromtragfähigkeit der Nullpotential-Brückenzweige (zweite Treiberstufe) ist, desto geringer sind die Mehrkosten für schaltverlustoptimierte Schalter.

In einer ersten, besonders bevorzugten Variante sind die Halbleiterschalter der ersten Treiberstufe als IGBTs (Silizium oder SiC) mit Freilaufdiode ausgebildet. In diesem Fall können die Halbleiterschalter der zweiten Treiberstufe vorzugsweise als SiC-Leistungsschalter, insbesondere als SiC-MOSFETs, ausgebildet sein.

In einer zweiten, gleichfalls bevorzugten Variante sind die Halbleiterschalter der ersten Treiberstufe als SiC-MOSFETs ausgelegt. In diesem Fall können die Halbleiterschalter der zweiten Treiberstufe als GaN-basierte MOSFETs ausgelegt sein.

In einer dritten bevorzugten Variante sind die Halbleiterschalter der ersten Treiberstufe als IGBTs mit Freilaufdiode ausgelegt. In diesem Fall können die Halbleiterschalter der zweiten Treiberstufe als GaN-Leistungsschalter, insbesondere als GaN-MOSFETs, ausgelegt sein.

Gemäß einem besonders bevorzugten Ausführungsbeispiel besteht das flussführende Material im Rotor aus Eisen oder einer Eisenlegierung. Elektrische Drehfeldmaschinen - und hier vorzugsweise Synchronmaschinen mit Doppelrotor - können im Rotor mit flussführendem Material in Massivbauweise d.h. aus Vollmaterial, ausgeführt werden. Das ist damit zu begründen, dass in einer idealisierten Betrachtung bei Synchronmaschinen keine periodische Relativbewegung zwischen dem Richtungsvektor des von der Ständerwicklung erzeugten Drehfelds und dem Doppelrotor stattfindet. Die magnetische Flussdichte in einem Betriebspunkt ist damit konstant und es treten keine Eisenverluste im Material auf. Bei solchen permanentmagneterregten Maschinen, deren Magnete auf der Läuferoberfläche montiert sind, ermöglicht der hierdurch gewährleistete Abstand zwischen Ständernuten und flussführendem Material den Einsatz von Vollmaterial ohne ein Ansteigen der Zusatzverluste.

Gemäß einem ebenfalls besonders bevorzugten Ausführungsbeispiel weist die elektrische Maschine einen Stator mit einem Ständer auf, wobei der Ständer zur Führung eines vorrangig radialen Magnetflusses, insbesondere zur Vermeidung einer Magnetflussführung in tangentialer Richtung, ausgebildet ist. Es handelt sich somit um eine so genannte "jochlose" Ausführung des Stators, die insbesondere eine Magnetflussführung in umfänglicher Richtung vermeidet. Ein magnetischer Rückschluss im Ständer ist dabei nicht erforderlich, wodurch Gewicht und Eisenverluste reduziert werden.

Gemäß einer Ausführungsform weist der Ständer des Stators eine radiale Jochdicke auf, welche weniger als 30%, vorzugsweise weniger als 20%, besonders bevorzugt weniger als 10% einer gesamten radialen Ständerdicke beträgt. Bei einer so genannten "jochlosen" Ausführung wird auf diese Weise dennoch eine mechanische Verbindung der Ständerzähne bereitgestellt, was elektromagnetisch jedoch nicht notwendig wäre und worüber auch kein funktionsrelevanter Magnetfluss stattfindet. Der Begriff "jochlos" bezieht sich somit auf die elektromagnetische Auslegung des Ständers.

Gemäß einem ebenfalls besonders bevorzugten Ausführungsbeispiel ist die Synchronmaschine eine dreiphasige Synchronmaschine ist. In diesem Fall ist die Wechselrichterschaltung vorzugsweise zumindest als Dreiphasenwechselrichter ausgebildet. Eine Erkenntnis der vorliegenden Erfindung besteht auch darin, dass Synchronmaschinen, die sich einer drei- oder mehrstufigen Wechselrichtertopologie bedienen, eine wesentlich verbesserte Gesamteffizienz des Antriebssystems zeigen.

Gemäß einem ebenfalls besonders bevorzugten Ausführungsbeispiel ist die elektrische Maschine als Radnabenmotor für ein elektrisch betreibbares Kraftfahrzeug ausgebildet. Ein Radnabenmotor ist eine elektrische Maschine, die direkt in ein Rad und insbesondere in die Nabe eines Fahrzeugs eingebaut ist und gleichzeitig die Radnabe trägt. Ein Teil des Nabenmotors überträgt das erzeugte Drehmoment direkt auf das anzutreibende Rad, mit dem er umläuft. Bei elektrischen Radnabenmotoren sind dabei sowohl Innen- als auch Außenläufermotoren denkbar. Hauptvorteil von solchen elektrischen Radnabenmotoren in Fahrzeugen ist gegenüber Antriebskonzepten mit einem zentralen Motor der Wegfall des klassischen Antriebsstrangs mit den je nach Ausprägung notwendigen Komponenten (Getriebe, Kardanwelle, Differenzialgetriebe, Antriebswelle, etc.). Da auch deren Übertragungsverluste wegfallen, bieten sich Potenziale zur Wirkungsgradsteigerung des gesamten Antriebssystems. Auch lässt sich bei einem elektrischen Radnabenmotor eine effiziente Rekuperation, also eine Rückgewinnung von elektrischer Energie beim Bremsen des Fahrzeugs, implementieren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: anhand eines Blockschaltbildes ein erfindungsgemäßes elektrisches Antriebssystem;
- Fig. 2: anhand einer schematischen Querschnittsdarstellung ein Beispiel für eine elektrische Maschine des erfindungsgemäßen elektrischen Antriebssystems gemäß Figur 1;
- Fig. 3: anhand eines Blockschaltbildes eine drei- oder mehrstufige Wechselrichterschaltung für ein erfindungsgemäßes elektrisches Antriebssystem entsprechend Figur 1;
- Fig. 4: anhand eines Schaltbildes ein besonders bevorzugtes Ausführungsbeispiel einer erfindungsgemäßen Wechselrichterschaltung;
- Fig. 5: anhand eines Flussdiagramms ein erfindungsgemäßes Verfahren zum Betreiben eines elektrischen Antriebssystems.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

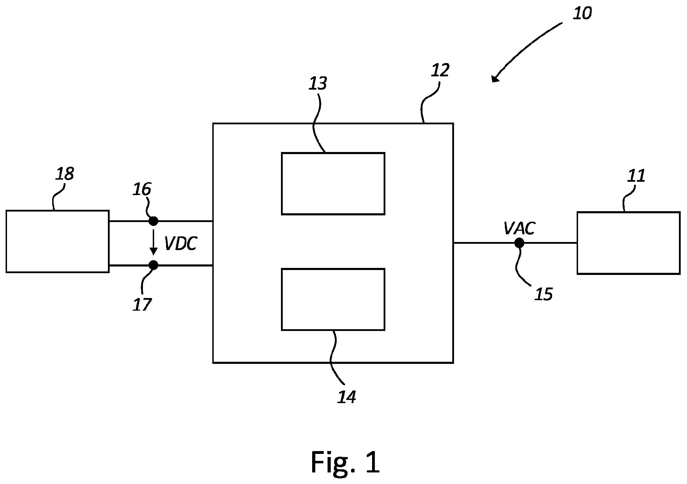

Fig. 1 zeigt anhand eines Blockschaltbildes ein erfindungsgemäßes elektrisches Antriebssystem für ein Kraftfahrzeug.

Das hier mit Bezugszeichen 10 bezeichnete elektrische Antriebssystem ist vorzugsweise - jedoch nicht notwendigerweise - für den Einsatz in einem Kraftfahrzeug vorgesehen. Das Antriebssystem 10 umfasst zumindest eine mehrphasige elektrische Maschine 11 sowie eine Wechselrichterschaltung 12.

Die elektrische Maschine 11 ist eingangsseitig mit der Wechselrichterschaltung 12 verbunden, die die elektrische Maschine 11 antreibt. Die Wechselrichterschaltung 12 ist erfindungsgemäß als drei- oder mehrstufige Wechselrichterschaltung 12 ausgebildet. Die Wechselrichterschaltung 12 weist einen Wechselrichter 13 sowie eine Betriebsmodus-Einstelleinrichtung 14 auf.

Der Wechselrichter 13 ist über seinen Lastausgang 15 mit der elektrischen Maschine 11 und über Versorgungsanschlüsse 16, 17 mit einer Versorgungsspannungsquelle 18 gekoppelt. Der Wechselrichter 13 ist dabei dazu ausgelegt, eine versorgungsseitig aufgenommene Gleichspannung VDC in eine Wechselspannung VAC zu wandeln. Der Wechselrichter 13 ist als mehrphasiger Wechselrichter 13 ausgebildet, wobei die Anzahl der Phasen des Wechselrichters 13 typischerweise der Anzahl der Phasen der elektrischen Maschine 11 entspricht. Die elektrische Maschine 11 wird über die vom Wechselrichter 13 am Lastausgang 15 bereitgestellten Phasenströme angetrieben.

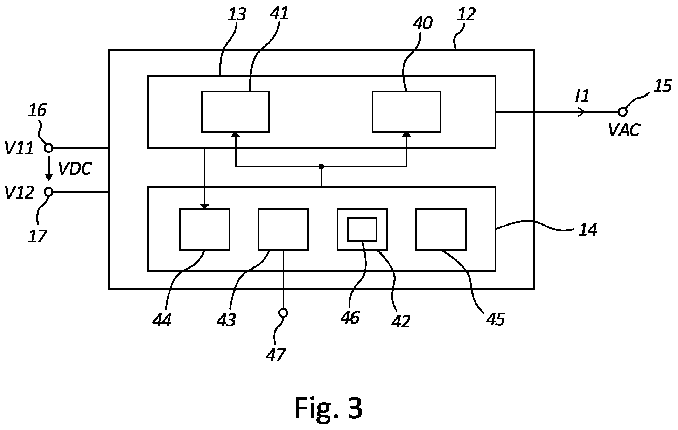

Erfindungsgemäß ist der Betriebsmodus der Wechselrichterschaltung 12 über die Betriebsmodus-Einstelleinrichtung 14, welche eingangsseitig u.a. mit der elektrischen Maschine 11 gekoppelt ist, einstellbar. Insbesondere ist über die Betriebsmodus-Einstelleinrichtung 14 einstellbar, ob der Wechselrichter 13 in einem zweistufigen Betrieb, in einem drei- oder mehrstufigen Betrieb oder in einem Mischbetrieb arbeitet. Der Mischbetrieb bezeichnet einen Betriebsmodus, bei dem der Wechselrichter sowohl in einem zweistufigen Betrieb als auch drei- oder mehrstufigen Betrieb betrieben wird, wie dies zum Beispiel bei einem Übergang von einem Betriebsmodus zum nächsten vorkommen kann. Der Aufbau und die Funktionsweise der Betriebsmodus-Einstelleinrichtung 14 wird nachfolgend anhand der folgenden Figuren 3 bis 6 noch im Detail erläutert.

Die elektrische Maschine 11 ist vorzugsweise, jedoch nicht notwendigerweise eine dreiphasige Synchronmaschine 11. In diesem Fall beinhaltet die Wechselrichterschaltung 12 vorzugsweise einen Dreiphasenwechselrichter 13.

Ebenfalls bevorzugt ist es, wenn die elektrische Maschine 11 des elektrischen Antriebssystems 10 ein Radnabenmotor für ein elektrisch betreibbares Kraftfahrzeug ist. Jedoch wären auch andere Anwendungen denkbar und vorteilhaft.

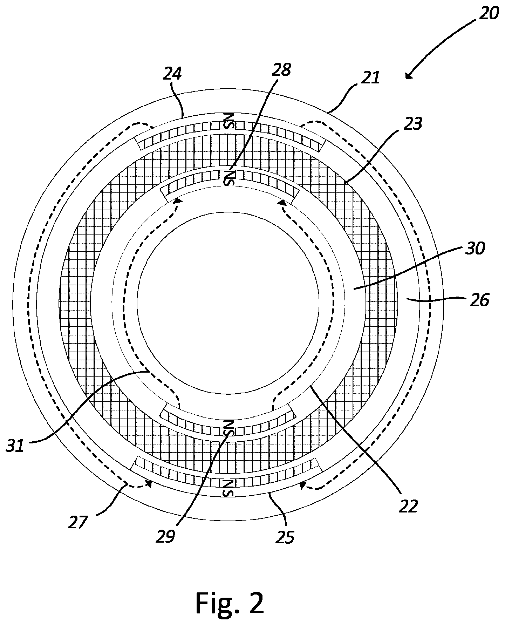

Fig. 2 zeigt anhand einer schematischen Querschnittsdarstellung ein Beispiel für eine elektrische Maschine des erfindungsgemäßen elektrischen Antriebssystems gemäß Figur 1.

Die elektrische Maschine 11 ist vorzugsweise als Synchronmaschine 11 ausgebildet. Ein für die Erfindung wesentlicher, jedoch nicht zwingend erforderlicher Aspekt ist der Umstand, dass die Synchronmaschine bzw. die elektrische Maschine 11 mit einem Doppelrotor 20 ausgestattet ist und dass der Doppelrotor ferner aus flussführendem Material aus Vollmaterial aufgebaut ist. Der Querschnitt des Doppelrotor- Synchronmaschine 11 ist in Figur 2 dargestellt. Die Doppelrotormaschine 20 umfasst dabei den äußeren Rotor 21 und den inneren Rotor 22. Zwischen den beiden Rotoren 21, 22 ist der Stator 23 in an sich bekannter Weise angeordnet. Der Stator 23 kann dabei vorzugsweise, jedoch nicht notwendigerweise, ein jochloser Stator 23 sein.

Der äußere Rotor 21 und innere Rotor 22 sind vorzugsweise nicht geblecht, sondern aus Vollmaterialaufgebaut. Der innere Rotor 22 ist dabei rohrförmig ausgebildet. Denkbar wäre jedoch eine massive, vollvolumige Ausgestaltung des inneren Rotors 22.

Zwischen dem äußeren Rotor 21 und dem Stator 23 sind im gezeigten Bespiel zwei gegenpolige Magnete 24, 25 auf der inneren Oberfläche des äußeren Rotors 21 im äußeren Luftspalt 26 aufgesetzt. Denkbar und vorteilhaft wäre es, wenn die Magnete 24, 25 in eigens dafür vorgesehenen taschenförmige Ausnehmungen äußeren Rotors 21 eingebettet sind. Denkbar wäre jedoch auch, wenn die Magnete 24, 25 vom äußeren Rotor 21 beabstandet sind, also nicht direkt auf dessen innerer Oberfläche angebracht sind. Die Flusslinien 27 zwischen Nord- und Südpol der gegenpoligen Magnete 24, 25 verlaufen hier im Kernmaterial des äußeren Rotors 21.

Zwischen dem inneren Rotor 22 und dem Stator 23 sind im gezeigten Bespiel ebenfalls zwei gegenpolige Magnete 28, 29 auf der inneren Oberfläche des inneren Rotors 22 im inneren Luftspalt 30 aufgesetzt. Auch hier können die Magnete 28, 29 in entsprechende Taschen des inneren Rotors 22 eingebettet sein oder vom inneren Rotor 22 beabstandet sein. Die Flusslinien 31 zwischen Nord- und Südpol der gegenpoligen Magnete 28, 29 verlaufen hier im Kernmaterial des inneren Rotors 22.

Das flussführende Material im äußeren und/oder inneren Rotor 21, 22 besteht dabei vorzugsweise aus massivem Eisen oder einer entsprechenden massiven Eisenlegierung.

Fig. 3 zeigt anhand eines Blockschaltbildes eine drei- oder mehrstufige Wechselrichterschaltung für ein erfindungsgemäßes elektrisches Antriebssystem entsprechend Figur 1.

Die Wechselrichterschaltung 12 umfasst dabei - wie bereits anhand der Figur erläutert, zwei Versorgungsanschlüsse 16, 17, einen Lastausgang 15, einen drei- oder mehrstufigen Wechselrichter 13 sowie eine Betriebsmodus-Einstelleinrichtung 14.

An dem ersten Versorgungsanschluss 16 ist ein erstes Versorgungspotenzial V11, beispielsweise ein positives Versorgungspotenzial, abgreifbar. An dem zweiten Versorgungsanschluss 17 ist ein zweites Versorgungspotenzial V12, beispielsweise ein negatives Versorgungspotenzial oder ein Bezugspotenzial, abgreifbar. Damit liegt zwischen den Versorgungsanschlüssen 16, 17 eine Versorgungsgleichspannung VDC=V11-V12 an.

Am Lastausgang 15 ist ein mehrphasiger Laststrom I1 abgreifbar, über welchen die verschiedenen Phasen der über den Lastausgang 15 anschließbaren elektrischen Maschine 11 betrieben werden.

Zwischen den Versorgungsanschlüssen 16, 17 und dem Lastausgang 15 ist der steuerbare drei- oder mehrstufige Wechselrichter 13 angeordnet. Der Wechselrichter 13 ist dazu ausgelegt, eine versorgungsseitig aufgenommene Gleichspannung VDC in eine Wechselspannung VAC zu wandeln, um am Lastausgang den mehrphasiger Laststrom I1 bereitzustellen.

Der Wechselrichter 13 weist eine erste Treiberstufe 40 und zumindest eine zweite Treiberstufe 41 auf. Die zweite Treiberstufe 41 ist dazu ausgelegt, Ausgangslastströme an den Lastausgang 15 zu führen, welche kleiner sind als die von der ersten Treiberstufe 40 bereit gestellten Ausgangslastströme.

Die Betriebsmodus-Einstelleinrichtung 14 dient dem Zweck, den Betriebsmodus des Wechselrichters 13 und damit der gesamten Wechselrichterschaltung 12 einzustellen und somit zu steuern. Insbesondere ist der Wechselrichter 13 dazu ausgelegt, den Wechselrichter 13 entweder in einem ersten Betriebsmodus in einem drei- oder mehrstufigen Betrieb oder in einem zweiten Betriebsmodus in einem zwei-stufigen Betrieb zu betreiben. Denkbar wäre auch zumindest ein dritter Betriebsmodus, welcher eine Mischform von zwei-stufigem Betrieb und drei- oder mehrstufigem Betrieb beinhaltet. Der dritte Betriebsmodus wäre insbesondere bei einem Übergang vom ersten Betriebsmodus in den zweiten Betriebsmodus und umgekehrt denkbar und sinnvoll.

Die Betriebsmodus-Einstelleinrichtung 14 steuert dabei den verwendeten Betriebsmodus des Wechselrichters 13 abhängig von der Gesamteffizienz des gesamten elektrischen Antriebssystems 10. Die Gesamteffizienz ist dabei eine Funktion des erfassten Phasenstroms der elektrischen Maschine 11 sowie zumindest eines weiteren die Gesamteffizienz beeinflussenden Parameter und/oder eines weiteren die Gesamteffizienz beeinflussende Eigenschaft der elektrischen Maschine 11.

Zum Zwecke der Einstellung des jeweils verwendeten Betriebsmodus umfasst die Betriebsmodus-Einstelleinrichtung 14 zumindest eine der nachfolgenden Einrichtungen:
- eine Auswerteeinrichtung 42;
- eine erste Messeinrichtungen 43;
- eine zweite Messeinrichtungen 44;
- eine Steuereinrichtung 45.

Die Auswerteeinrichtung 42 ist dazu ausgelegt, anhand des Phasenstroms sowie des zumindest einen weiteren Parameter und/oder der zumindest einer weiteren Eigenschaft eine Optimierung der Gesamteffizienz des elektrischen Antriebssystems 10 vorzunehmen. Dies kann zum Beispiel in-situ, also während des Betriebs des elektrischen Antriebssystems 10 erfolgen. Vorzugsweise wird die relativ rechenaufwändige Berechnung jedoch im Vorhinein vorgenommen, beispielsweise durch geeignete Berechnung (z.B. numerisch oder analytisch) und/oder unter Verwendung eines vorgegebenen Kennlinienfelds. Beispielsweise erfolgt die nummerische Effizienzberechnung für den 2L-Betrieb und 3L-Betrieb sowie das Abbilden der Funktion mit Entscheidungsausgang im Vorherein, also offline. Die Wahl der besseren Effizienz mit Hilfe der Umschaltung sowie die Anwendung der Lookup-Tabelle auf die Effizienzermittlung kann auch - jedoch nicht ausschließlich - mehr oder weniger dynamisch während des Betriebs vorgenommen werden.

Zum Zweck der Optimierung weist die Auswerteeinrichtung 42 ein Optimierungsmodul 46 auf. Das Optimierungsmodul 46 berechnet zunächst die Gesamteffizienz. Anschließend wird zum Beispiel über eine Optimierungsfunktion die Gesamteffizienz unter Berücksichtigung des Phasenstroms sowie des zumindest einen weiteren Parameters und/oder Eigenschaft analytisch oder über eine Lookup-Table optimiert.

Die Betriebsmodus-Einstelleinrichtung 14 umfasst darüber hinaus auch erste und/oder zweite Messeinrichtungen 43, 44. Die erste Messeinrichtung 43 weist zum Beispiel zumindest einen Sensoreingang 47 auf. Dabei ist die Betriebsmodus-Einstelleinrichtung 14 über die Sensoreingänge 47 mit der elektrischen Maschine 11 koppelbar, um elektrische oder physikalische Parameter der elektrischen Maschine 11, wie etwa den Phasenstrom, die Temperatur und/oder die Rotorgeschwindigkeit der elektrischen Maschine 11 aufzunehmen und zu erfassen. Die zweite Messeinrichtung 44 die derart angeordnet, um zum Beispiel die Temperatur und/oder die Zwischenkreisspannung des Wechselrichters 13 zu erfassen. Über die zweite Messeinrichtung 44 lässt sich darüber hinaus auch die Versorgungsspannung VDC erfassen.

Die eigentliche Steuerung des Wechselrichters erfolgt dabei über eine eigens dafür vorgesehen Steuereinrichtung 45. Die Steuereinrichtung 45 stellt dabei den jeweiligen Betriebsmodus des Wechselrichters 13 ein, d.h. ob der Wechselrichter 13 im drei- oder mehrstufigen Betrieb oder im zwei-stufigen Betrieb betrieben wird. Die Steuereinrichtung 45 kann zum Beispiel den Wechselrichter 13 derart steuern, dass im drei- oder mehrstufigen Betrieb beide Treiberstufen 40, 41 aktiviert sind und im zwei-stufigen Betrieb die zweite Treiberstufe 40 deaktiviert ist.

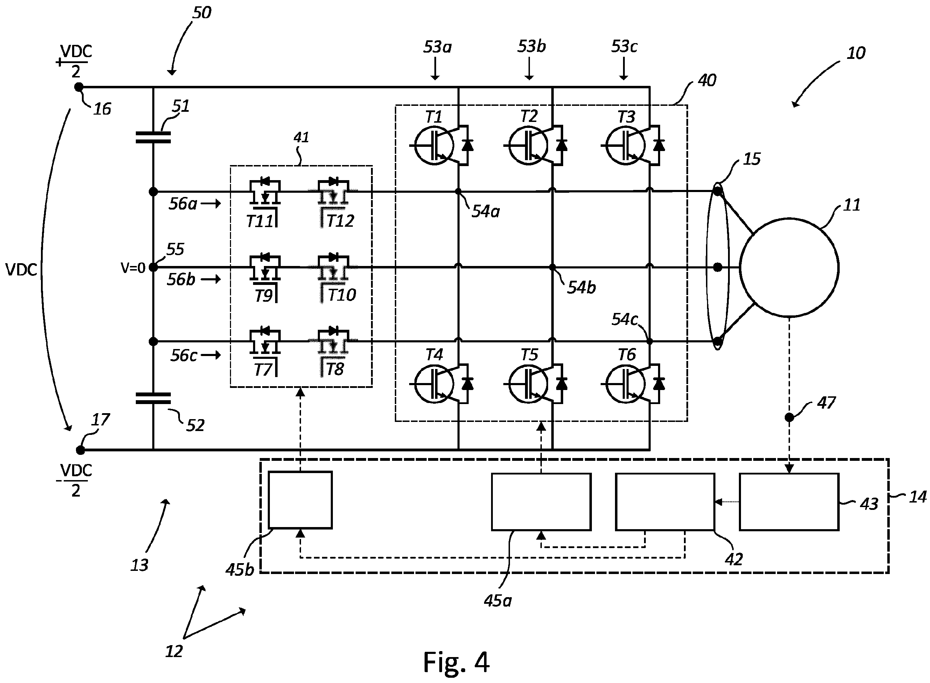

Fig. 4 zeigt anhand eines Schaltbildes ein besonders bevorzugtes Ausführungsbeispiel einer erfindungsgemäßen Wechselrichterschaltung.

An den Versorgungsanschlüssen 16, 17 liegt die Versorgungsgleichspannung VDC, wobei am ersten Versorgungsanschluss 16 das Versorgungspotenzial V11 = VDC/2 und am zweiten Versorgungsanschluss 17 das Versorgungspotenzial V12 = -VDC/2 abgreifbar ist. Denkbar wäre auch eine Konstellation, bei der am zweiten Versorgungsanschluss 17 ein Bezugspotenzial, beispielsweise das Potenzial der Bezugsmasse GND, anliegt. In dem Fall würde am ersten Versorgungsanschluss 16 das Versorgungspotenzial V11 = VDC abgreifbar sein.

Eingangsseitig des Wechselrichters 13 ist eine Zwischenkreisschaltung 50 bestehend aus einer Reihenschaltung zweier Zwischenkreiskondensatoren 51, 52 geschaltet. Die Zwischenkreisschaltung 50 fungiert als Energiespeicher.

Der in Figur 4 dargestellte Wechselrichter 13 beinhaltet eine T-Typ neutralpunkt geklemmte Wechselrichterarchitektur.

Zu diesem Zweck weist die erste, äußere Treiberstufe im gezeigten Fall eines 3-phasigen Wechselrichters drei Halbbrückenschaltungen 53a-53c auf, die bezüglich deren Laststrecken jeweils ebenfalls lastseitig zwischen den Versorgungsanschlüssen 16, 17 geschaltet sind. Die jeweiligen Mittelabgriffe 54a-54c der Halbbrückenschaltungen 53a-53c bilden jeweils eine Ausgangslastanschluss 15a-15c des Wechselrichters 13. Jede der Halbbrückenschaltungen 53a-53c weist dabei jeweils einen ersten steuerbaren Leistungsschalter T1, T2, T3 auf, die als High-Side-Schalter ausgebildet sind. Diese ersten Leistungsschalter T1, T2, T3 sind mit dem ersten Versorgungsanschluss 16 verbunden. Die ersten Leistungsschalter T1, T2, T3 sind dazu ausgelegt sind, am Lastausgang 15 eine erste Spannungsstufe bereitzustellen. Jede der Halbbrückenschaltungen 53a-53c weist ferner jeweils einen zweiten steuerbaren Leistungsschalter T4, T5, T6 auf, die als Low-Side-Schalter ausgebildet sind. Diese zweiten Leistungsschalter T4, T5, T6 sind mit dem zweiten Versorgungsanschluss 17 verbunden. Die zweiten Leistungsschalter T4, T5, T6 sind dazu ausgelegt, am Lastausgang 15 eine zweite Spannungsstufe bereitzustellen.

Die zweite, innere Treiberstufe 41 ist zwischen dem Mittelabgriff 55 der Zwischenkreisschaltung und den Ausgangslastanschlüssen 15a-15c - und somit den jeweiligen Mittelabgriffen 54a-54c der Halbbrückenschaltungen 53a-53c - geschaltet. Die zweite Treiberstufe 41 umfasst im gezeigten Beispiel jeweils drei Schaltungszweige 56a-56c. Jeder der Schaltungszweige 56a-56c umfasst dabei eine Reihenschaltung aus zwei steuerbaren Leistungsschaltern T7/T8; T9/T10; T11/T12, die bezüglich derer Laststrecken antiparallel angeordnet sind. Die steuerbaren Leistungsschalter T7/T8; T9/T10; T11/T12 sind dazu ausgelegt, am Lastausgang 15a-15c einen dritten Spannungslevel, der zwischen dem ersten und dem zweiten Spannungslevel liegt, bereitzustellen.

Zu Ansteuerung der jeweiligen steuerbaren Leistungsschalter weist die Steuereinrichtung 45 eine erste Steuereinheit 45a und eine zweite Steuereinheit 45b auf. Die erste Steuereinheit 45a ist dazu ausgebildet, die Leistungsschalter T1-T6 der ersten Treiberstufe 40 anzusteuern. Die zweite Steuereinheit 45b ist dazu ausgebildet, die Leistungsschalter T7-T12 der zweiten Treiberstufe 41 anzusteuern.

Bei dem Ausführungsbeispiel in Figur 4 ist der Wechselrichter 13 hybrid ausgebildet. In diesem Falle sind die Leistungsschalter des Wechselrichters 13 nicht in derselben Halbleitertechnologie hergestellt und/oder vom selben Schaltertyp. Insbesondere sind im gezeigten Beispiel die Leistungsschalter T1-T6 Si-IGBTs mit Si-Freilaufdioden ausgebildet. Die Leistungsschalter T7-T12 sind als SiC-MOSFETs ausgebildet.

Alternativ (nicht in Fig. 4 gezeigt) können die Leistungsschalter T7-T12 als SiC-MOSFETs und die Leistungsschalter T1-T6 als GaN-MOSFETs ausgebildet sind.

Alternativ (ebenfalls nicht in Fig. 4 gezeigt) können die Leistungsschalter T7-T12 als IGBT mit Freilaufdiode und die Leistungsschalter T1-T6 als GaN-Leistungsschalter, insbesondere als GaN-MOSFETs, ausgebildet sind.

Alternativ (ebenfalls nicht in Fig. 4 gezeigt) können in einer so genannten homogenen Wechselrichtertopologie alle Leistungsschalter T1-T12 des Wechselrichters 13 vom selben Schaltertyps sein und/oder mit derselben Halbleitertechnologie hergestellt sein, zum Beispiel als GaN-Leistungsschalter, SiC-Leistungsschalter, wie etwa SiC-MOSFETs, ausgelegt.

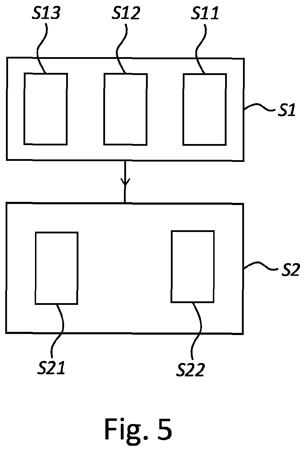

Figur 5 zeigt anhand eines Flussdiagramms ein erfindungsgemäßes Verfahren zum Betreiben eines elektrischen Antriebssystems. Das elektrische Antriebssystem, welches beispielsweise ein Antriebssystem entsprechend Figur 1 sein kann, weist dabei eine mit einem Doppelrotor ausgestattete Synchronmaschine auf. Der Doppelrotor ist aus flussführendem Material aus Vollmaterial aufgebaut.

In einem ersten Schritt S1 wird die Gesamteffizienz des elektrischen Antriebssystems ermittelt, beispielsweise offline. Hierzu wird zunächst der Phasenstrom der elektrischen Maschine des elektrischen Antriebssystems erfasst (S11). Zusätzlich wird zumindest ein weiterer, die Gesamteffizienz beeinflussender Parameter (S12) und/oder zumindest eine weitere die Gesamteffizienz beeinflussende Eigenschaft (S13) der elektrischen Maschine ermittelt.

Aus all diesen Informationen wird in einem nächsten Schritt S2 die Synchronmaschine betrieben. Hierzu wird eine steuerbare drei- oder mehrstufige Wechselrichterschaltung verwendet. Der steuerbare drei- oder mehrstufige Wechselrichter der Wechselrichterschaltung wird dabei in Abhängigkeit der Gesamteffizient des elektrischen Antriebssystems sowie der diese beeinflussenden Parameter und Eigenschaften entweder sowohl im drei- oder mehrstufigen Betriebsmodus S21 oder im zwei-stufigen Betriebsmodus S22 betrieben.

Denkbar wäre auch eine Mischform aus drei- oder mehrstufigem Betrieb und zwei-stufigem Betrieb. Eine solche Mischbetriebsform wäre beispielsweise bei einem Übergang vom drei- oder mehrstufigen Betrieb in den zwei-stufigen Betrieb denkbar und vorteilhaft, um zum Beispiel ein hartes Umschalten zu vermeiden. Letzteres könnte mit Verlusten und somit Effizienzeinbußen einhergehen.

### Bezugszeichenliste

- 10: elektrisches Antriebssystem
- 11: elektrische Maschine, Synchronmaschine
- 12: (drei- oder mehrstufige) Wechselrichterschaltung
- 13: (drei- oder mehrstufiger) Wechselrichter
- 14: Betriebsmodus-Einstelleinrichtung
- 15: Lastausgang
- 15a-15c: Ausgangslastanschluss
- 16, 17: Versorgungsanschlüsse
- 18: Versorgungsspannungsquelle
- 20: Doppelrotor, Doppelrotormaschine
- 21: äußerer Rotor
- 22: innerer Rotor
- 23: Stator
- 24, 25: gegenpolige Magnete (des äußeren Rotors)
- 26: (äußerer) Luftspalt
- 27: (äußere) Flusslinien
- 28, 29: gegenpolige Magnete (des inneren Rotors)
- 30: (innerer) Luftspalt
- 31: (innere) Flusslinien
- 40: erste (äußere) Treiberstufe
- 41: zweite (innere) Treiberstufe
- 42: Auswerteeinrichtung
- 43: erste Messeinrichtungen
- 44: zweite Messeinrichtungen
- 45: Steuereinrichtung
- 46: Optimierungsmodul
- 47: Sensoreingang
- 50: Zwischenkreisschaltung
- 51, 52: Zwischenkreiskondensatoren
- 53a-53c: Halbbrückenschaltung
- 54a-54c: Mittelabgriffe
- 55: Mittelabgriff

- I1: (mehrphasiger) Laststrom
- S1, S2: Verfahrensschritte
- S11 - S13: Unterschritte
- S21, S22: Unterschritte
- T1 - T3: erste Leistungsschalter der Halbbrückenschaltung, High-Side-Schalter
- T4 - T6: zweite Leistungsschalter der Halbbrückenschaltung, Low-Side-Schalter
- T7 - T12: Leistungsschalter
- VAC: (ausgangsseitige) Wechselspannung
- VDC: (eingangsseitige) Gleichspannung
- V11: (positives) Versorgungspotenzial
- V12: (negatives) Versorgungspotenzial, Bezugspotenzial

## Patentansprüche

1. Elektrisches Antriebssystem (10) für oder in einem Kraftfahrzeug,
mit zumindest einer mehrphasigen elektrischen Maschine (11), die eine Synchronmaschine mit einem Doppelrotor (20) aufweist, wobei der Doppelrotor (20) aus flussführendem Material aus Vollmaterial aufgebaut ist,
mit einer drei- oder mehrstufigen Wechselrichterschaltung (12) zur Ansteuerung der mehrphasigen elektrischen Maschine (11), wobei die Wechselrichterschaltung (12) aufweist:
zwei Versorgungsanschlüsse (16, 17), die mit einem ersten und einem zweiten Versorgungspotential (V11, V12) einer Spannungsversorgung (18) koppelbar sind,
ein Lastausgang (15), der für jede Phase der elektrischen Maschine einen Lastausgangsanschluss (15a - 15c) aufweist und der mit der elektrischen Maschine (11) koppelbar ist,
einen zwischen den Versorgungsanschlüssen (16, 17) und dem Lastausgang (15) angeordneten steuerbaren drei- oder mehrstufigen Wechselrichter (13), welcher dazu ausgelegt ist, eine versorgungsseitig aufgenommene Gleichspannung (VDC) in eine Wechselspannung (VAC) zum Antreiben einer an dem Lastausgang (15) angeschlossenen elektrischen Maschine (11) zu wandeln,
eine Betriebsmodus-Einstelleinrichtung (14), die über Sensoreingänge mit der elektrischen Maschine (11) koppelbar ist und welche dazu ausgelegt ist, den Wechselrichter (13) in Abhängigkeit einer Gesamteffizienz des elektrischen Antriebssystems (10), die eine Gesamteffizienz des Wechselrichters (13) und der elektrischen Maschine (11) umfasst, von einem drei- oder mehrstufigen Betrieb in einen zweistufigen Betrieb und umgekehrt zu überführen, wobei die Gesamteffizienz eine Funktion des durch die Sensoreingänge erfassten Phasenstroms der elektrischen Maschine (11) sowie zumindest eines weiteren die Gesamteffizienz beeinflussenden Parameters und einer weiteren die Gesamteffizienz beeinflussenden Eigenschaft der elektrischen Maschine (11) ist,
wobei als weiterer Parameter zumindest einer der folgenden Parameter vorgesehen ist:
- Temperatur der Wechselrichterschaltung (12);
- Temperatur der elektrischen Maschine (11);
- Zwischenkreisspannung;
- Rotorgeschwindigkeit;
- Drehmoment der elektrischen Maschine (11);
- Phasenspannung,
wobei die die Gesamteffizienz beeinflussende Eigenschaft der elektrischen Maschine (11) zumindest den verwendeten Betriebsmodus oder die Ausgestaltung des Rotors (20) umfasst,
wobei die Betriebsmodus-Einstelleinrichtung (14) aufweist:
- eine erste Messeinrichtung (43), die einen Sensoreingang aufweist, über den die erste Messeinrichtung (43) mit der elektrischen Maschine (11) koppelbar ist, wobei die erste Messeinrichtung (43) dazu ausgebildet ist, den Phasenstrom, die Temperatur und/oder die Rotorgeschwindigkeit der elektrischen Maschine (11) zu erfassen, und
- eine zweite Messeinrichtung (44), die derart angeordnet und ausgebildet ist, um die Temperatur und/oder die Zwischenkreisspannung des Wechselrichters (13) zu erfassen.

2. Antriebssystem nach Anspruch 1,
**dadurch gekennzeichnet,**
**dass** die Betriebsmodus-Einstelleinrichtung (14) eine Auswerteeinrichtung (42) aufweist, welche dazu ausgelegt ist, anhand des Phasenstroms sowie zumindest eines weiteren Parameters und der zumindest einer weiteren Eigenschaft eine Optimierung der Gesamteffizienz vorzunehmen,
wobei die Auswerteschaltung (42) insbesondere dazu vorgesehen ist, die Gesamteffizienz zu berechnen und/oder anhand eines vorgegebenen Kennlinienfelds zu ermitteln.

3. Antriebssystem nach Anspruch 2,
**dadurch gekennzeichnet,**
**dass** die Auswerteeinrichtung (42) ein Optimierungsmodul (46) aufweist, welches dazu ausgebildet ist, die Gesamteffizienz des Antriebssystems (10) zunächst zu berechnen und/oder anschließend über eine Optimierungsfunktion die Gesamteffizienz des Antriebssystems (10) unter Berücksichtigung des Phasenstroms sowie zumindest eines weiteren Parameters und einer Eigenschaft numerisch, analytisch oder über eine Lookup-Tabelle zu optimieren.

4. Antriebssystem nach einem der vorherigen Ansprüche,
**dadurch gekennzeichnet,**
**dass** der Wechselrichter (13) eine T-Typ neutralpunkt geklemmte Wechselrichterarchitektur beinhaltet.

5. Antriebssystem nach einem der vorstehenden Ansprüche,
**dadurch gekennzeichnet,**
**dass** der Wechselrichter (13) eine erste Treiberstufe (40) und zumindest eine zweite Treiberstufe aufweist, wobei die zweite Treiberstufe (41) dazu ausgelegt ist, Ausgangslastströme an den Lastausgang (15) zu führen, welche kleiner sind als die von der ersten Treiberstufe (40) bereit gestellten Ausgangslastströme.

6. Antriebssystem nach Anspruch 5,
**dadurch gekennzeichnet,**
**dass** die Betriebsmodus-Einstelleinrichtung (14) eine Steuereinrichtung (45) aufweist, welche dazu ausgelegt ist, den Wechselrichter (13) derart zu steuern, dass im drei- oder mehrstufigen Betrieb die erste Treiberstufe (40) sowie die zweite Treiberstufe (41) aktiviert sind und im zwei-stufigen Betrieb zumindest eine der Treiberstufen (40, 41) deaktiviert ist.

7. Antriebssystem nach Anspruch 5 oder 6,
**dadurch gekennzeichnet,**
**dass** die erste Treiberstufe (40) zumindest eine Brückenschaltung (53a - 53c), insbesondere eine Halbbrückenschaltung (53a - 53c), aufweist, deren Mittelabgriff (54a - 54c) den Ausgangslastanschluss der Wechselrichterschaltung (12) bildet, wobei jede Brückenschaltung (53a - 53c) zumindest einen ersten Leistungsschalter (T1 - T3) aufweist, welcher mit einem ersten Versorgungsanschluss (16) verbunden ist und welche dazu ausgelegt ist, am Lastausgang (15) eine erste Spannungsstufe bereitzustellen, und wobei jede Brückenschaltung (53a - 53c) ferner zumindest einen zweiten Leistungsschalter (T4 - T6) aufweist, welche mit einem zweiten Versorgungsanschluss (17) verbunden sind und welche dazu ausgelegt sind, am Lastausgang (15) eine zweite Spannungsstufe bereitzustellen,
wobei die zweite Treiberstufe (41) insbesondere zumindest einen dritten Leistungsschalter (T7 - T12) aufweist, deren Laststrecken in Reihe zwischen einer Zwischenkreisschaltung (50) und dem Mittelabgriff (54a - 54c) der ersten Treiberstufe (40) geschaltet sind und welche dazu ausgelegt sind, am Lastausgang (15) einen dritten Spannungslevel, der zwischen dem ersten und dem zweiten Spannungslevel liegt, bereitzustellen.

8. Antriebssystem nach einem der vorherigen Ansprüche,
**dadurch gekennzeichnet,**
**dass** alle Leistungsschalter (T1 - T12) des Wechselrichters (13) als Halbleiterschalter desselben Schaltertyps und/oder derselben Halbleitertechnologie ausgebildet sind,
wobei die Halbleiterschalter (T1 - T12) insbesondere als GaN-Leistungsschalter und/oder SiC-Leistungsschalter ausgelegt sind.

9. Antriebssystem nach einem der Ansprüche 1 bis 7,
**dadurch gekennzeichnet,**
**dass** für die Halbleiterschalter (T1 - T12) des Wechselrichters (13) zumindest zwei unterschiedliche Schaltertypen und/oder zumindest zwei unterschiedliche Halbleitertechnologien vorgesehen sind.

10. Antriebssystem nach Anspruch 9,
**dadurch gekennzeichnet,**
**dass** die Halbleiterschalter (T1 - T12) der ersten Treiberstufe (40) als IGBTs mit Freilaufdiode ausgebildet sind und dass die Halbleiterschalter (T1 - T12) der zweiten Treiberstufe (41) als SiC-Leistungsschalter ausgebildet sind,
oder dass die Halbleiterschalter (T1 - T12) der ersten Treiberstufe (40) als SiC-MOSFETs ausgelegt sind und dass die Halbleiterschalter (T1 - T12) der zweiten Treiberstufe (41) als GaN-MOSFETs ausgelegt sind,
oder dass die Halbleiterschalter (T1 - T12) der ersten Treiberstufe (40) als IGBT mit Freilaufdiode ausgelegt sind und dass die Halbleiterschalter (T1 - T12) der zweiten Treiberstufe (41) als GaN-Leistungsschalter ausgelegt sind.

11. Antriebssystem nach einem der vorherigen Ansprüche,
**dadurch gekennzeichnet,**
**dass** das flussführende Material im Doppelrotor (21, 22) aus Eisen oder einer Eisenlegierung besteht.

12. Antriebssystem nach einem der vorherigen Ansprüche,
**dadurch gekennzeichnet,**
**dass** die elektrische Maschine (11) einen Stator (23) mit einem Ständer aufweist, wobei der Ständer zur Führung eines vorrangig radialen Magnetflusses, insbesondere zur Vermeidung einer Magnetflussführung in tangentialer Richtung, ausgebildet ist, wobei der Ständer des Stators (23) eine radiale Jochdicke aufweist, welche insbesondere weniger als 30%, vorzugsweise weniger als 20%, besonders bevorzugt weniger als 10% einer gesamten radialen Ständerdicke beträgt.

13. Antriebssystem nach einem der vorherigen systembezogenen Ansprüche,
**dadurch gekennzeichnet,**
**dass** die Synchronmaschine eine dreiphasige Synchronmaschine ist und dass die Wechselrichterschaltung (12) ein Dreiphasenwechselrichter ist.

14. Antriebssystem nach einem der vorherigen systembezogenen Ansprüche,
**dadurch gekennzeichnet,**
**dass** die elektrische Maschine (11) ein Radnabenmotor für ein elektrisch betreibbares Kraftfahrzeug ist.

15. Verfahren zum Betreiben eines elektrischen Antriebssystems (10) nach einem der Ansprüche 1 bis 14, welches eine mit einem Doppelrotor (20) ausgestattete Synchronmaschine aufweist, wobei der Doppelrotor (20) aus flussführendem Material aus Vollmaterial aufgebaut ist,
wobei die Synchronmaschine mittels eines steuerbaren drei- oder mehrstufigen Wechselrichters (13) in Abhängigkeit einer Gesamteffizienz des elektrischen Antriebssystems (10), die eine Gesamteffizienz des Wechselrichters (13) und der elektrischen Maschine (11) umfasst, sowohl in einem drei- oder mehrstufigen Betriebsmodus als auch in einem zweistufigen Betriebsmodus betreibbar ist,
wobei die Gesamteffizienz des elektrischen Antriebssystems (10) aus dem durch Sensoreingänge erfassten Phasenstrom der elektrischen Maschine (11), zumindest einem weiteren die Gesamteffizienz beeinflussenden Parameter und zumindest einer weiteren die Gesamteffizienz beeinflussenden Eigenschaft der elektrischen Maschine (11) ermittelt wird,
wobei als weiterer Parameter zumindest einer der folgenden Parameter vorgesehen ist:
- Temperatur der Wechselrichterschaltung (12);
- Temperatur der elektrischen Maschine (11);
- Zwischenkreisspannung;
- Rotorgeschwindigkeit;
- Drehmoment der elektrischen Maschine (11);
- Phasenspannung,
wobei die die Gesamteffizienz beeinflussende Eigenschaft der elektrischen Maschine (11) zumindest den verwendeten Betriebsmodus oder die Ausgestaltung des Rotors (20) umfasst,
wobei die Betriebsmodus-Einstelleinrichtung (14) eine erste Messeinrichtung (43), die einen Sensoreingang aufweist, über den die erste Messeinrichtung (43) mit der elektrischen Maschine (11) koppelbar ist, und eine zweite Messeinrichtung (44) aufweist,
mit den Schritten:
Erfassen, durch die erste Messeinrichtung (43), den Phasenstrom, die Temperatur und/oder die Rotorgeschwindigkeit der elektrischen Maschine (11),
Erfassen, durch die zweite Messeinrichtung (44), die Temperatur und/oder die Zwischenkreisspannung des Wechselrichters (13);
Ermitteln der Gesamteffizienz des elektrischen Antriebssystems (10); und
Betreiben der elektrischen Maschine (11) in Abhängigkeit der ermittelten Effizienz.

## Claims

1. Electric drive system (10) for or in a motor vehicle,
comprising at least one multi-phase electric machine (11) which has a synchronous machine with a double rotor (20), the double rotor (20) being constructed from flux-carrying material made of solid material,
comprising a three-stage or multi-stage inverter circuit (12) for controlling the multi-phase electric machine (11), the inverter circuit (12) having:
two supply terminals (16, 17) which can be connected to a first and a second supply potential (V11, V12) of a power supply (18),
a load output (15) which has a load output terminal (15a-15c) for each phase of the electric machine and which can be coupled to the electric machine (11),
a controllable three-stage or multi-stage inverter (13) which is arranged between the supply terminals (16, 17) and the load output (15) and which is configured to convert a DC voltage (VDC) received on the supply side into an AC voltage (VAC) for driving an electric machine (11) connected to the load output (15),
an operating mode setting device (14) which can be coupled to the electric machine (11) via sensor inputs and which is configured to switch the inverter (13) from three-stage or multi-stage operation to two-stage operation and vice versa as a function of an overall efficiency of the electric drive system (10), which includes an overall efficiency of the inverter (13) and of the electric machine (11), the overall efficiency being a function of the phase current of the electric machine (11) detected by the sensor inputs as well as at least one further parameter influencing the overall efficiency and a further property of the electric machine (11) influencing the overall efficiency,
wherein at least one of the following parameters is provided as a further parameter:
- temperature of the inverter circuit (12);
- temperature of the electric machine (11);
- intermediate circuit voltage;
- rotor speed;
- torque of the electric machine (11);
- phase voltage,
wherein the property of the electric machine (11) influencing the overall efficiency includes at least the operating mode used or the configuration of the rotor (20),
wherein the operating mode setting device (14) has:
- a first measuring device (43), having a sensor input via which the first measuring device (43) can be coupled to the electric machine (11), the first measuring device (43) being configured to detect the phase current, the temperature and/or the rotor speed of the electric machine (11), and
- a second measuring device (44), arranged and configured so as to detect the temperature and/or the intermediate circuit voltage of the inverter (13).

2. Drive system according to claim 1,
**characterised**
**in that** the operating mode setting device (14) has an evaluation device (42) which is configured to optimise the overall efficiency on the basis of the phase current and at least one further parameter and the at least one further property,
the evaluation circuit (42) in particular being provided for calculating the overall efficiency and/or for determining it on the basis of a given performance map.

3. Drive system according to claim 2,
**characterised**
**in that** the evaluation device (42) has an optimisation module (46) which is configured initially to calculate the overall efficiency of the drive system (10) and/or subsequently to optimise the overall efficiency of the drive system (10) numerically, analytically or via a lookup table, using an optimisation function and taking into account the phase current and at least one further parameter and a property.

4. Drive system according to any of the preceding claims,
**characterised**
**in that** the inverter (13) contains a T-type neutral-point clamped inverter architecture.

5. Drive system according to any of the preceding claims,
**characterised**
**in that** the inverter (13) has a first driver stage (40) and at least one second driver stage, the second driver stage (41) being configured to supply output load currents to the load output (15) which are smaller than the output load currents provided by the first driver stage (40).

6. Drive system according to claim 5,
**characterised**
**in that** the operating mode setting device (14) has a control device (45) which is configured to control the inverter (13) in such a way that in three-stage or multi-stage operation the first driver stage (40) and the second driver stage (41) are activated and in two-stage operation at least one of the driver stages (40, 41) is deactivated.

7. Drive system according to either claim 5 or claim 6,
**characterised**
**in that** the first driver stage (40) comprises at least one bridge circuit (53a-53c), in particular a half-bridge circuit (53a-53c), the centre tap (54a-54c) of which forms the output load terminal of the inverter circuit (12), each bridge circuit (53a-53c) having at least one first power switch (T1-T3) which is connected to a first supply terminal (16) and which is configured to provide a first voltage stage at the load output (15), and each bridge circuit (53a-53c) further having at least one second power switch (T4-T6), said switches being connected to a second supply terminal (17) and being configured to provide a second voltage stage at the load output (15),
the second driver stage (41) in particular having at least one third power switch (T7-T12), the load paths of said switches being connected in series between an intermediate circuit (50) and the centre tap (54a-54c) of the first driver stage (40), and said switches being configured to provide a third voltage level at the load output (15) which is between the first and the second voltage level.

8. Drive system according to any of the preceding claims,
**characterised**
**in that** all power switches (T1-T12) of the inverter (13) are configured as semiconductor switches of the same switch type and/or the same semiconductor technology,
the semiconductor switches (T1-T12) in particular being configured as GaN power switches and/or SiC power switches.

9. Drive system according to any of claims 1 to 7,
**characterised**
**in that** at least two different switch types and/or at least two different semiconductor technologies are provided for the semiconductor switches (T1-T12) of the inverter (13).

10. Drive system according to claim 9,
**characterised**
**in that** the semiconductor switches (T1-T12) of the first driver stage (40) are configured as freewheeling diode IGBTs and in that the semiconductor switches (T1-T12) of the second driver stage (41) are configured as SiC power switches,
or in that the semiconductor switches (T1-T12) of the first driver stage (40) are configured as SiC MOSFETs and in that the semiconductor switches (T1-T12) of the second driver stage (41) are configured as GaN MOSFETs,
or in that the semiconductor switches (T1-T12) of the first driver stage (40) are configured as freewheeling diode IGBTs and in that the semiconductor switches (T1-T12) of the second driver stage (41) are configured as GaN power switches.

11. Drive system according to any of the preceding claims,
**characterised**
**in that** the flux-carrying material in the double rotor (21, 22) consists of iron or an iron alloy.

12. Drive system according to any of the preceding claims,
**characterised**
**in that** the electric machine (11) has a stator (23) with a column, the column being configured to carry a predominantly radial magnetic flux, in particular to avoid carrying magnetic flux in a tangential direction, the column of the stator (23) having a radial yoke thickness which is in particular less than 30%, preferably less than 20%, particularly preferably less than 10% of a total radial column thickness.

13. Drive system according to any of the preceding system claims,
**characterised**
**in that** the synchronous machine is a three-phase synchronous machine and in that the inverter circuit (12) is a three-phase inverter.

14. Drive system according to any of the preceding system claims,
**characterised**
**in that** the electric machine (11) is a wheel hub motor for an electrically powered motor vehicle.

15. Method for operating an electric drive system (10) according to any of claims 1 to 14, which has a synchronous machine equipped with a double rotor (20), the double rotor (20) being constructed from flux-carrying material made of solid material,
wherein the synchronous machine can be operated both in a three-stage or multi-stage operating mode and in a two-stage operating mode by means of a controllable three-stage or multi-stage inverter (13), as a function of an overall efficiency of the electric drive system (10) which includes an overall efficiency of the inverter (13) and the electric machine (11),
wherein the overall efficiency of the electric drive system (10) is determined from the phase current of the electric machine (11) detected by sensor inputs, at least one further parameter influencing the overall efficiency and at least one further property of the electric machine (11) influencing the overall efficiency is determined,
wherein at least one of the following parameters is provided as a further parameter:
- temperature of the inverter circuit (12);
- temperature of the electric machine (11);
- intermediate circuit voltage;
- rotor speed;
- torque of the electric machine (11);
- phase voltage,
wherein the property of the electric machine (11) influencing the overall efficiency includes at least the operating mode used or the configuration of the rotor (20),
wherein the operating mode setting device (14) has a first measuring device (43), having a sensor input via which the first measuring device (43) can be coupled to the electric machine (11), and a second measuring device (44),
comprising the steps of:
detecting, by means of the first measuring device (43), the phase current, temperature and/or rotor speed of the electric machine (11),
detecting, by means of the second measuring device (44), the temperature and/or intermediate circuit voltage of the inverter (13);
determining the overall efficiency of the electric drive system (10); and
operating the electric machine (11) as a function of the determined efficiency.

## Revendications

1. Système d'entraînement électrique (10) pour ou dans un véhicule automobile,
avec au moins une machine électrique polyphasée (11) qui présente une machine synchrone avec un double rotor (20), le double rotor (20) étant constitué d'un matériau conducteur de flux en matériau plein,
avec un circuit onduleur (12) à trois étages ou plus pour la commande de la machine électrique polyphasée (11), le circuit onduleur (12) présentant :
deux bornes d'alimentation (16, 17) pouvant être couplées à un premier et un deuxième potentiel d'alimentation (V11, V12) d'une alimentation en tension (18),
une sortie de charge (15) qui présente, pour chaque phase de la machine électrique, une borne de sortie de charge (15a - 15c) et qui peut être couplée à la machine électrique (11),
un onduleur commandable à trois étages ou plus (13) disposé entre les bornes d'alimentation (16, 17) et la sortie de charge (15), lequel est conçu pour convertir une tension continue (VDC) prélevée côté alimentation en une tension alternative (VAC) destinée à entraîner une machine électrique (11) raccordée à la sortie de charge (15),
un dispositif de réglage de mode de fonctionnement (14) qui peut être couplé à la machine électrique (11) via des entrées de capteurs et qui est conçu pour faire passer l'onduleur (13), en fonction d'un rendement global du système d'entraînement électrique (10), qui comprend un rendement global de l'onduleur (13) et de la machine électrique (11), d'un fonctionnement à trois étages ou plus à un fonctionnement à deux étages et
inversement, le rendement global étant une fonction du courant de phase de la machine électrique (11) détecté par les entrées de capteurs ainsi que d'au moins un paramètre supplémentaire influençant le rendement global et une caractéristique supplémentaire de la machine électrique (11) influençant le rendement global,
dans lequel au moins l'un des paramètres suivants est prévu comme paramètre supplémentaire :
- température du circuit onduleur (12) ;
- température de la machine électrique (11) ;
- tension de circuit intermédiaire ;
- vitesse de rotor ;
- couple de la machine électrique (11) ;
- tension de phase,
dans lequel la caractéristique de la machine électrique (11) influençant le rendement global comprend au moins le mode de fonctionnement utilisé ou la configuration du rotor (20),
dans lequel le dispositif de réglage de mode de fonctionnement (14) présente :
- un premier dispositif de mesure (43) qui présente une entrée de capteur via laquelle le premier dispositif de mesure (43) peut être couplé à la machine électrique (11), le premier dispositif de mesure (43) étant conçu pour détecter le courant de phase, la température et/ou la vitesse de rotor de la machine électrique (11), et
- un deuxième dispositif de mesure (44) qui est disposé et conçu de manière à détecter la température et/ou la tension de circuit intermédiaire de l'onduleur (13).

2. Système d'entraînement selon la revendication 1,
**caractérisé en ce**
**que** le dispositif de réglage de mode de fonctionnement (14) présente un dispositif d'évaluation (42) qui est conçu pour procéder à une optimisation du rendement global à l'aide du courant de phase ainsi que d'au moins un paramètre supplémentaire et de ladite au moins une caractéristique supplémentaire,
le circuit d'évaluation (42) étant en particulier prévu pour calculer le rendement global et/ou le déterminer à l'aide d'un champ de courbes caractéristiques prédéfini.

3. Système d'entraînement selon la revendication 2,
**caractérisé en ce**
**que** le dispositif d'évaluation (42) présente un module d'optimisation (46) qui est conçu pour calculer dans un premier temps le rendement global du système d'entraînement (10) et/ou optimiser ensuite, au moyen d'une fonction d'optimisation, le rendement global du système d'entraînement (10) en tenant compte du courant de phase ainsi que d'au moins un paramètre supplémentaire et d'une caractéristique de manière numérique, analytique ou au moyen d'une table de consultation.

4. Système d'entraînement selon l'une des revendications précédentes,
**caractérisé en ce**
**que** l'onduleur (13) contient une architecture d'onduleur de type T à neutre clampé.

5. Système d'entraînement selon l'une des revendications précédentes,
**caractérisé en ce**
**que** l'onduleur (13) présente un premier étage d'attaque (40) et au moins un deuxième étage d'attaque, le deuxième étage d'attaque (41) étant conçu pour conduire à la sortie de charge (15) des courants de charge de sortie qui sont inférieurs aux courants de charge de sortie fournis par le premier étage d'attaque (40).

6. Système d'entraînement selon la revendication 5,
**caractérisé en ce**
**que** le dispositif de réglage de mode de fonctionnement (14) présente un dispositif de commande (45) qui est conçu pour commander l'onduleur (13) de telle sorte que, en fonctionnement à trois étages ou plus, le premier étage d'attaque (40) ainsi que le deuxième étage d'attaque (41) soient activés et que, en fonctionnement à deux étages, au moins l'un des étages d'attaque (40, 41) soit désactivé.

7. Système d'entraînement selon la revendication 5 ou 6,
**caractérisé en ce**
**que** le premier étage d'attaque (40) présente au moins un circuit en pont (53a - 53c), en particulier un circuit en demi-pont (53a - 53c), dont la prise médiane (54a - 54c) forme la borne de charge de sortie du circuit onduleur (12), chaque circuit en pont (53a - 53c) présentant au moins un premier commutateur de puissance (T1 - T3) qui est relié à une première borne d'alimentation (16) et qui est conçu pour fournir un premier niveau de tension à la sortie de charge (15), et chaque circuit en pont (53a - 53c) présentant en outre au moins un deuxième commutateur de puissance (T4 - T6) qui est relié à une deuxième borne d'alimentation (17) et qui est conçu pour fournir un deuxième niveau de tension à la sortie de charge (15),
dans lequel le deuxième étage d'attaque (41) présente en particulier au moins un troisième commutateur de puissance (T7 - T12) dont les lignes de charge sont montées en série entre un circuit intermédiaire (50) et la prise médiane (54a - 54c) du premier étage d'attaque (40) et qui sont conçues pour fournir, à la sortie de charge (15), un troisième niveau de tension qui se situe entre le premier et le deuxième niveau de tension.

8. Système d'entraînement selon l'une des revendications précédentes,
**caractérisé en ce**
**que** tous les commutateurs de puissance (T1 - T12) de l'onduleur (13) sont conçus comme des commutateurs à semi-conducteurs du même type de commutateurs et/ou de la même technologie de semi-conducteurs, les commutateurs à semi-conducteurs (T1 à T12) étant en particulier conçus comme des commutateurs de puissance GaN et/ou des commutateurs de puissance SiC.

9. Système d'entraînement selon l'une des revendications 1 à 7,
**caractérisé en ce**
**que**, pour les commutateurs à semi-conducteurs (T1 - T12) de l'onduleur (13), au moins deux types de commutateurs différents et/ou au moins deux technologies de semi-conducteurs différentes sont prévus.

10. Système d'entraînement selon la revendication 9,
**caractérisé en ce**
**que** les commutateurs à semi-conducteurs (T1 - T12) du premier étage d'attaque (40) sont conçus comme des IGBT avec diode de roue libre et que les commutateurs à semi-conducteurs (T1 - T12) du deuxième étage d'attaque (41) sont conçus comme des commutateurs de puissance SiC,
ou que les commutateurs à semi-conducteurs (T1 - T12) du premier étage d'attaque (40) sont conçus comme des MOSFET SiC et que les commutateurs à semi-conducteurs (T1 - T12) du deuxième étage d'attaque (41) sont conçus comme des MOSFET GaN,
ou que les commutateurs à semi-conducteurs (T1 - T12) du premier étage d'attaque (40) sont conçus comme des IGBT avec diode de roue libre et que les commutateurs à semi-conducteurs (T1 - T12) du deuxième étage d'attaque (41) sont conçus comme des commutateurs de puissance GaN.

11. Système d'entraînement selon l'une des revendications précédentes,
**caractérisé en ce**
**que** le matériau conducteur de flux dans le double rotor (21, 22) est constitué de fer ou d'un alliage de fer.

12. Système d'entraînement selon l'une des revendications précédentes,
**caractérisé en ce**
**que** la machine électrique (11) présente un stator (23) avec un noyau de stator, le noyau de stator étant conçu pour guider un flux magnétique principalement radial, en particulier pour éviter un guidage de flux magnétique dans une direction tangentielle, le noyau du stator (23) présentant une épaisseur radiale de culasse qui est en particulier inférieure à 30 %, de préférence inférieure à 20 %, et de manière particulièrement préférée inférieure à 10 % de l'épaisseur radiale totale du noyau de stator.

13. Système d'entraînement selon l'une des revendications précédentes relatives au système,
**caractérisé en ce**
**que** la machine synchrone est une machine synchrone triphasée et que le circuit onduleur (12) est un onduleur triphasé.

14. Système d'entraînement selon l'une des revendications précédentes relatives au système,
**caractérisé en ce**
**que** la machine électrique (11) est un moteur de moyeu de roue pour un véhicule automobile à propulsion électrique.

15. Procédé pour faire fonctionner un système d'entraînement électrique (10) selon l'une des revendications 1 à 14, qui présente une machine synchrone équipée d'un double rotor (20), le double rotor (20) étant constitué d'un matériau conducteur de flux en matériau plein,
dans lequel la machine synchrone peut fonctionner au moyen d'un onduleur à trois étages ou plus (13) en fonction d'un rendement global du système d'entraînement électrique (10), qui comprend un rendement global de l'onduleur (13) et de la machine électrique (11), aussi bien dans un mode de fonctionnement à trois étages ou plus que dans un mode de fonctionnement à deux étages,
dans lequel le rendement global du système d'entraînement électrique (10) est déterminée à partir du courant de phase de la machine électrique (11) détecté par des entrées de capteurs, d'au moins un paramètre supplémentaire influençant le rendement global et d'au moins une caractéristique supplémentaire de la machine électrique (11) influençant le rendement global,
dans lequel au moins l'un des paramètres suivants est prévu comme paramètre supplémentaire :
- température du circuit onduleur (12) ;
- température de la machine électrique (11) ;
- tension de circuit intermédiaire ;
- vitesse de rotor ;
- couple de la machine électrique (11) ;
- tension de phase,
dans lequel la caractéristique de la machine électrique (11) influençant le rendement global comprend au moins le mode de fonctionnement utilisé ou la configuration du rotor (20),
dans lequel le dispositif de réglage de mode de fonctionnement (14) présente un premier dispositif de mesure (43) qui présente une entrée de capteur via laquelle le premier dispositif de mesure (43) peut être couplé à la machine électrique (11), et un deuxième dispositif de mesure (44),
comprenant les étapes consistant à :
détecter, par le premier dispositif de mesure (43), le courant de phase, la température et/ou la vitesse de rotor de la machine électrique (11),
détecter, par le deuxième dispositif de mesure (44), la température et/ou la tension de circuit intermédiaire de l'onduleur (13) ;
déterminer le rendement global du système d'entraînement électrique (10) ; et
faire fonctionner la machine électrique (11) en fonction du rendement déterminé.
